# FASCICULE DE BREVET EUROPEEN

(11) **EP 1 418 371 B1**
(45) Date de publication et mention de la délivrance du brevet: **19.07.2006**
(21) Numéro de dépôt: 03292548.9
(22) Date de dépôt: 14.10.2003
(51) Int. Cl.: F16J 15/32, G01P 3/44

(54) **Joint dynamique pour arbre rotatif muni d'un dispositif de codage angulaire, dispositif comportant un tel joint et procédé de fabrication d'un tel joint**
Dynamische Dichtung mit Winkelkodierung für rotierende Wellen, Vorrichtung mit einer solchen Dichtungund und Herstellungsverfahren
Dynamic sealing with angular coding for a rotary shaft, device comprising such a seal, and method of manufacturing the same

(30) Priorité: 07.11.2002 FR 0213940
(43) Date de publication de la demande: 12.05.2004
(73) Titulaire: HUTCHINSON, 75008 Paris (FR)
(72) Inventeur: Branchereau, Bernard, 49500 Segre (FR)
(74) Mandataire: Burbaud, Eric

(56) Documents cités:
- EP-A- 0 949 510
- EP-A- 1 164 318
- DE-A- 10 050 983

## Description

La présente invention concerne un joint dynamique pour arbre rotatif comprenant un manchon destiné à être calé en rotation sur l'arbre, et une lèvre annulaire destinée à venir en contact rotatif glissant avec un carter fixe entourant l'arbre, de sorte que le joint dynamique assure l'étanchéité entre ledit arbre et ledit carter.

L'invention concerne plus particulièrement un tel joint équipé d'un dispositif de codage angulaire selon le préambule de la revendication 1.

Dans de nombreuses applications, et notamment pour les vilebrequins de moteurs à combustion interne et les arbres de sortie de boîte de vitesses, on équipe les arbres rotatifs de dispositifs de codage angulaire pour connaître leur vitesse de rotation instantanée et/ou leur position angulaire et/ou leur sens de rotation. Ces arbres rotatifs sont généralement équipés de joints dynamiques pour éviter toute fuite d'huile entre l'arbre et l'ouverture du carter traversé par l'arbre. On a cherché à regrouper le dispositif de repérage angulaire et le joint dynamique afin de limiter l'encombrement global occupé par ces deux éléments. Par exemple, le brevet EP-A-0 949 510 décrit un joint dynamique équipé d'un dispositif de repérage angulaire qui comprend un manchon solidaire de l'arbre rotatif muni d'une collerette recouverte d'un revêtement magnétisable. Le joint dynamique proprement dit est solidaire de la partie fixe et présente une lèvre qui vient en appui sur la surface extérieure du manchon. Cet ensemble formé de deux éléments nécessite :
- soit deux opérations de montage, ce qui oblige l'opérateur à vérifier que les éléments sont bien disposés l'un par rapport à l'autre ;
- soit l'utilisation d'un outillage complexe permettant le montage simultané des deux éléments.

On connaît du document EP-A-1 164 318 un joint dynamique selon le préambule de la revendication 1, qui est monté entre les cages d'un roulement à bille. La lèvre annulaire est en caoutchouc formé par vulcanisation tout comme le caoutchouc contenant des particules magnétiques qui forme l'élément codeur annulaire. Toutefois, une lèvre en caoutchouc peut présenter un coefficient de friction trop élevé pour certaines applications dans lesquelles les frottements entraînent un échauffement de celle-ci. De plus, le caoutchouc peut poser des problèmes d'encrassement et de résistance vis-à-vis de certains produits chimiques.

On connaît par ailleurs du document DE-A-100 50 983 un joint dynamique comportant une lèvre d'étanchéité en PTFE. Afin de former un ensemble unitaire, une extrémité de la lèvre en PTFE est noyée dans la masse d'élastomère entourant le manchon métallique. Cette fixation impose un maintien de la lèvre dans le moule avant l'injection du caoutchouc non vulcanisé, ce qui complexifie et augmente le coût des opérations de fabrication, notamment par rapport à un procédé de fabrication dans lequel le caoutchouc est vulcanisé par pressage à chaud.

La présente invention a pour but de pallier ces inconvénients en proposant un joint dynamique assurant des frottements réduits, le codage angulaire de l'arbre et qui puisse être monté facilement en une seule opération. Toutefois, l'encombrement et le coût de fabrication de ce dispositif doivent rester les plus réduits possibles.

A cet effet, la présente invention a pour objet un joint dynamique selon la revendication 1.

On obtient ainsi un ensemble unitaire qui assure à la fois le repérage angulaire de l'arbre et l'étanchéité entre l'arbre et le carter fixe, tout en minimisant les frottements grâce au PTFE.

Cet ensemble unitaire peut facilement être monté en une seule opération, par exemple par emmanchement du manchon sur l'arbre rotatif.

De plus, le coût de production de cette pièce unique est moins élevé que celui du joint dynamique et du dispositif de repérage angulaire décrit dans le brevet EP-A-0 949 510 mentionné précédemment.

Dans des formes de réalisations préférées de l'invention, on a recours, en outre à l'une et/ou à l'autre des dispositions suivantes :
- l'élément codeur est de l'élastoferrite ;
- la lèvre adhère directement sur l'élément codeur ;
- la surface annulaire de l'élément codeur s'étend radialement ;
- l'élément codeur adhère directement sur le manchon, ledit manchon étant métallique ;
- l'élément codeur présente une piste circulaire munie de repères polarisés formés par des secteurs polarisés alternativement nord-sud ;
- l'élément codeur présente une première face annulaire orientée radialement vers l'intérieur qui adhère directement sur une paroi extérieure du manchon s'étendant longitudinalement, et une deuxième face circulaire orientée radialement vers l'extérieur sur laquelle est formée la piste munie des repères polarisés ;
- la deuxième face circulaire présente une portion s'étendant le long d'une partie de l'arbre qui n'est pas entourée par le carter fixe, la piste munie des repères polarisés étant formée sur ladite portion ;
- le manchon présente une collerette annulaire s'étendant radialement tandis que l'élément codeur présente une première face annulaire s'étendant radialement qui adhère directement à ladite collerette, et une deuxième face circulaire, parallèle à la première face, sur laquelle est formée la piste munie des repères polarisés.

Par ailleurs, l'invention a également pour objet un dispositif comprenant un arbre rotatif, un carter rempli de liquide dans lequel pénètre l'arbre rotatif, et un joint dynamique tel que précédemment défini dont le manchon est calé en rotation par rapport à l'arbre rotatif et dont la lèvre d'étanchéité est en contact glissant avec le carter, en assurant l'étanchéité entre ledit arbre et ledit carter.

Enfin, l'invention a aussi pour objet un procédé de fabrication d'un joint dynamique d'étanchéité pour arbre rotatif tel que précédemment défini comprenant un manchon, un élément codeur annulaire en élastoferrite et une lèvre d'étanchéité en polymère à faible coefficient de friction, caractérisé :
- en ce qu'on place concentriquement dans un premier demi-moule ledit manchon, une ébauche dudit élément codeur et une préforme de ladite lèvre, ladite ébauche étant au moins partiellement en contact avec ledit manchon et ladite préforme étant au moins partiellement en contact avec ladite ébauche ;
- et en ce qu'on effectue un pressage à chaud à l'aide d'un deuxième demi-moule pour vulcaniser ladite ébauche et pour conformer ladite ébauche de l'élément codeur et ladite préforme de la lèvre selon un profil déterminé.

D'autres caractéristiques et avantages de l'invention apparaîtront au cours de la description qui va suivre, donnée à titre d'exemple non limitatif, en référence aux dessins annexés dans lesquels :
- la figure 1 est une vue en coupe longitudinale simplifiée d'un arbre muni d'un joint dynamique selon un premier mode de réalisation de l'invention ;
- la figure 2 est une vue analogue à la figure 1 d'un deuxième mode de réalisation ;
- la figure 3 est une vue analogue à la figure 1 d'un troisième mode de réalisation ;
- la figure 4 est une vue analogue à la figure 1 d'un quatrième mode de réalisation.

Sur les différentes figures, on a conservé les mêmes références pour désigner des éléments identiques ou similaires.

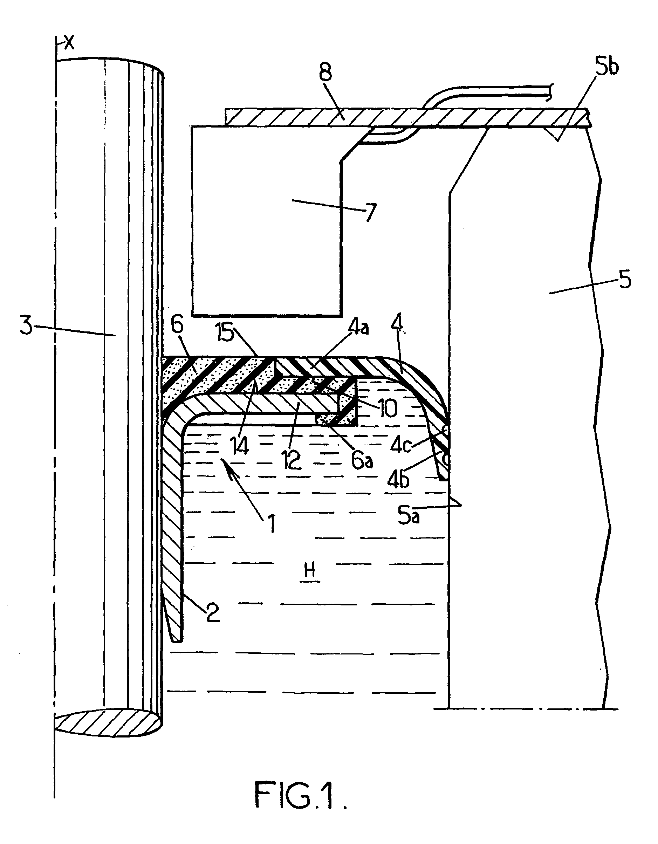

Comme on peut le voir sur la figure 1, le joint dynamique 1 comprend un manchon 2 calé en rotation sur un arbre rotatif 3 et une lèvre d'étanchéité annulaire 4 venant en contact rotatif glissant avec un carter fixe 5 entourant l'arbre 3, de manière à assurer l'étanchéité entre ledit arbre et ledit carter.

L'arbre 3 peut être constitué par le vilebrequin d'un moteur à combustion interne qui contient de l'huile chaude sous pression dans un espace intérieur H délimité par le carter fixe 5. Mais bien entendu, le joint dynamique représenté peut être monté sur tous types d'arbres rotatifs, comme par exemple un arbre de sortie de boîte de vitesses.

Le manchon 2 est métallique et est monté sur l'arbre rotatif 3 par emmanchement à force. Ce montage particulièrement simple permet d'immobiliser le manchon 2 en rotation et en translation par rapport à l'arbre 3. Mais on peut utiliser tout autre montage qui assure une immobilisation en rotation du manchon par rapport à l'arbre. Il est également envisageable d'utiliser un manchon en matière plastique.

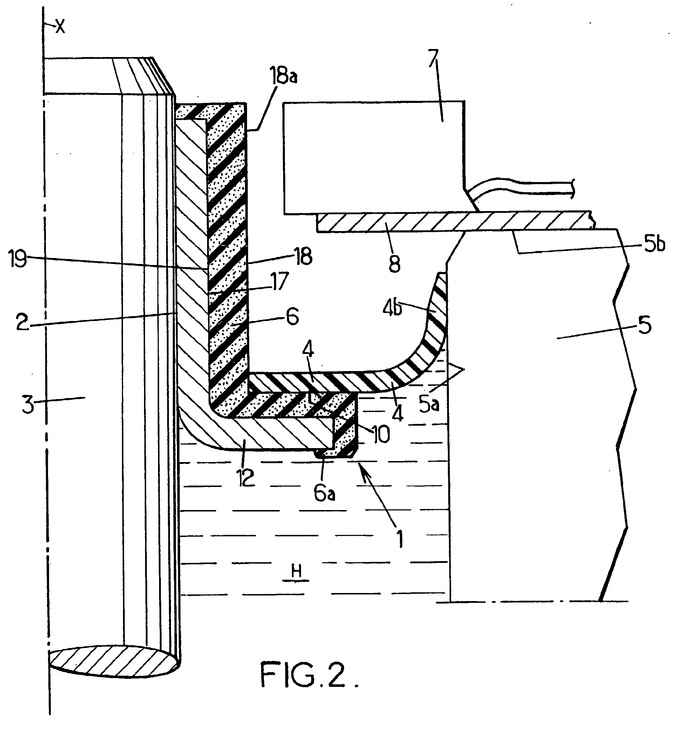

La lèvre annulaire 4 est en polymère à faible coefficient de friction, et de préférence en PTFE (polytétrafluoroéthylène), afin de limiter l'échauffement dû au glissement de la lèvre contre la paroi 5a du carter fixe 5 lorsque le joint tourne à haute vitesse. La lèvre 4 comporte une base 4a s'étendant radialement par rapport à l'axe de rotation X de l'arbre, et une extrémité 4b qui présente une certaine souplesse et qui est recourbée vers l'intérieur du carter 5 sous l'effet du contact avec la partie fixe du carter pour épouser parfaitement la paroi 5a du carter. L'extrémité peut aussi être recourbée vers l'extérieur du carter comme par exemple représenté à la figure 2, et elle peut comporter des rainures 4c destinées à améliorer l'étanchéité.

Un élément codeur annulaire 6 en polymère magnétisable est solidaire du manchon 2 et forme une surface de support sur laquelle est adhérisée la lèvre 4.

L'élément codeur annulaire 6 présente au moins un repère polarisé de manière à ce que le mouvement de rotation de l'arbre 3 puisse être détecté lors du passage du repère polarisé devant un capteur 7 placé à proximité de l'élément codeur 6. On peut utiliser un capteur à effet hall ou tout autre type de capteur susceptible de détecter une variation du champ magnétique et capable d'envoyer un signal électrique à une unité de traitement de données comme par exemple un boîtier de gestion électronique du moteur à combustion interne.

On obtient ainsi une pièce unique qui assure le repérage angulaire de l'arbre et l'étanchéité entre l'arbre et le carter fixe.

L'élément codeur 6 est de manière préférentielle de l'élastoferrite, c'est-à-dire un élastomère contenant des particules de ferrite qui peuvent générer un champ magnétique. Grâce à cette matière, on peut assembler de manière particulièrement simple, par exemple à l'aide du procédé décrit ci-après, les différents éléments du joint dynamique. En effet, l'élastoferrite qui est de nature différente du PTFE, peut adhérer directement au manchon métallique. De plus, l'élastoferrite peut aussi adhérer directement au PTFE. Ainsi, l'élément codeur forme un moyen de fixation de la lèvre en PTFE 4 sur le manchon métallique 2, alors qu'il est particulièrement difficile d'adhérer ou de coller du PTFE sur un élément métallique ou un élément présentant une surface lisse et dure.

Dans les différents modes de réalisation représentés, l'élément codeur 6 présente une surface annulaire 10 s'étendant radialement par rapport à l'axe X de l'arbre 3 pour former la surface de support sur laquelle la base 4a de la lèvre est adhérisée. Cette surface annulaire 10 est obtenue lors de l'injection de l'élastoferrite fondu dans un moule dans lequel la lèvre 4 a été préalablement disposée. On notera que la lèvre 4 peut être simplement posée à plat dans le moule, car un simple contact de surface avec l'élastoferrite fondu suffit pour solidariser la lèvre 4 et l'élément codeur 10.

Dans le mode de réalisation représenté à la figure 1, le manchon 2 présente une collerette annulaire 12 s'étendant radialement. L'élément codeur présente une première face annulaire 14 s'étendant radialement par rapport à l'axe de rotation X de l'arbre 3 et une seconde face circulaire 15 parallèle à la première face 14. La première face 14 adhère directement à la collerette 12 du manchon et la piste munie des repères polarisés est formée sur la deuxième face 15. Le capteur 7 est disposé longitudinalement en regard de ladite deuxième face 15 à l'aide d'une platine 8 fixée sur la face extérieure 5b du carter.

La piste peut comprendre un ensemble de secteurs équiangulaires polarisés alternativement nord-sud et éventuellement une zone formant une singularité magnétique afin de pouvoir déterminer une position angulaire absolue de l'arbre.

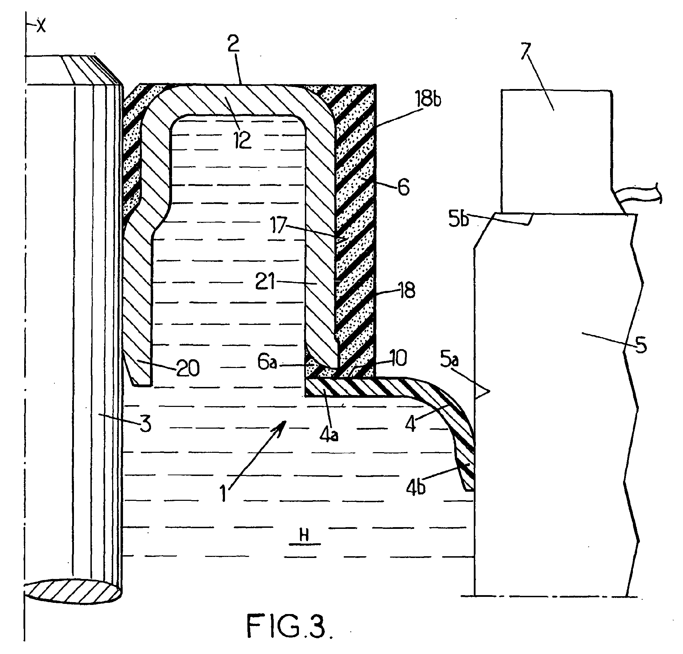

Dans les modes de réalisations représentés aux figures 2 et 3, l'élément codeur 6 présente une première face annulaire 17 orientée radialement vers l'intérieur et une seconde face circulaire 18 orientée radialement vers l'extérieur sur laquelle est formée la piste munie des repères polarisés. La première face 17 adhère directement sur une paroi extérieure 19 du manchon 2 qui s'étend longitudinalement le long de l'arbre 3. Sur la seconde face 18 de l'élément codeur 6 est formée la piste munie des repères polarisés. Dans ce cas, le capteur 7 est disposé radialement en regard de ladite piste.

De manière avantageuse, la deuxième face 18 de l'élément codeur 6 présente une portion 18a s'étendant le long d'une partie de l'arbre 3 qui n'est pas entourée par le carter fixe 5 et sur laquelle est formée la piste munie des repères polarisés. Ainsi, le capteur 7 peut être monté sur la face extérieure 5b du carter fixe, éventuellement à l'aide d'une platine intermédiaire 8.

Dans le mode de réalisation représenté à la figure 3, le manchon métallique 2 présente une section transversale en U ; une première branche 20 du U est emmanchée à force sur l'arbre rotatif 3, tandis que la deuxième branche 21 du U forme la paroi extérieure du manchon. La première face annulaire 17 de l'élément codeur 6 adhère directement sur cette paroi 21.

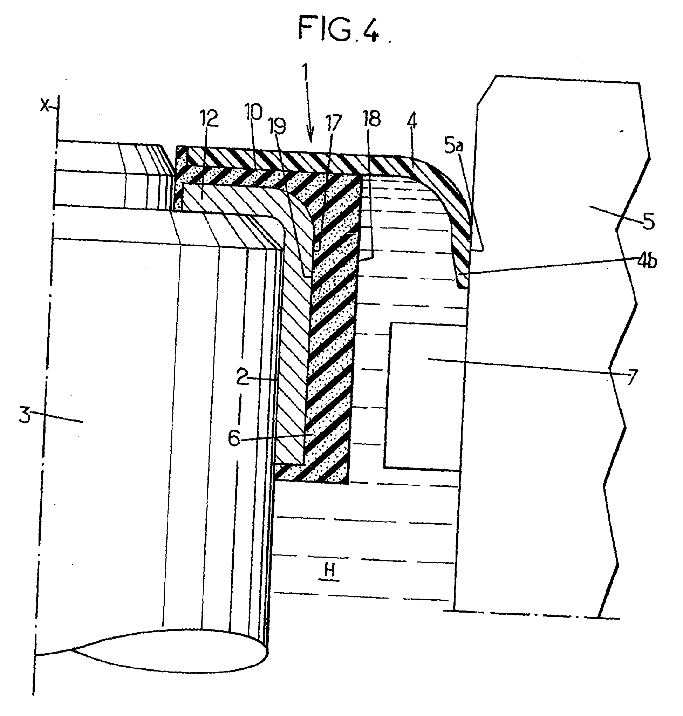

Selon un quatrième mode de réalisation représenté à la figure 4, le capteur 7 est agencé dans l'espace intérieur H du carter 5 contenant l'huile, contre la paroi 5a du carter orientée radialement vers l'arbre 3.

Une seconde face circulaire 18 de l'élément codeur 6 s'étend alors longitudinalement le long de l'arbre 3 depuis le côté intérieur de la lèvre 4 et comprend une piste munie de repères polarisés qui est agencée en regard du capteur 7.

La présente invention concerne également un procédé de fabrication du joint dynamique précédemment décrit. Selon ce procédé de fabrication, on place concentriquement dans un premier demi-moule le manchon 2, une ébauche dudit élément codeur 6 et un préforme de la lèvre en PTFE 4 de manière à ce que l'ébauche de l'élément codeur 6 soit au moins partiellement en contact avec le manchon 2 et que la préforme de la lèvre 4 soit au moins partiellement en contact avec l'ébauche. Puis on effectue un pressage à chaud à l'aide d'un deuxième demi-moule de manière à vulcaniser l'ébauche en élastoferrite.

La vulcanisation de l'ébauche de l'élément codeur 6 permet d'obtenir son adhésion au manchon métallique 2 et son adhésion avec la base 4a de la lèvre en PTFE.

Le pressage à chaud permet aussi de conformer l'ébauche de l'élément codeur 6 et la préforme de la lèvre 4, qui peuvent être de simples rondelles, pour obtenir leur forme définitive. Le fluage de l'élastoferrite sous l'action de la pression et de la chaleur permet notamment d'obtenir le rebord 6a qui vient surmouler le manchon 2.

Le profil définitif de l'extrémité 4b de la lèvre et notamment la rainure 4c peuvent être obtenus lors du procédé de fabrication décrit préalablement et leur rôle est d'améliorer l'étanchéité du contact de la lèvre 4 avec le carter 5.

Ce procédé permet d'assembler les différents éléments constitutifs du joint 1 et d'obtenir la forme définitive de l'élément codeur 6 de la lèvre 4 en une seule opération.

Mais bien entendu, le joint dynamique objet de l'invention peut être fabriqué selon des procédés différents. L'élément codeur peut notamment être solidarisé avec le manchon à l'aide de moyens de fixation mécaniques et la lèvre en polymère peut être collée sur l'élément codeur qui est lui-même en polymère.

## Revendications

1. Joint dynamique pour arbre rotatif comprenant un manchon (2) destiné à être calé en rotation sur l'arbre (3), une lèvre annulaire (4) destinée à venir en contact rotatif glissant avec un carter fixe (5) entourant ledit arbre, de sorte que le joint dynamique assure l'étanchéité entre ledit arbre et ledit carter, et un élément codeur annulaire (6) en polymère magnétisable présentant au moins un repère polarisé et au moins une surface annulaire (10), qui est solidaire dudit manchon (2), **caractérisé en ce que** la lèvre annulaire (4) est en PTFE, **et en ce que** ladite lèvre (4) est adhérisée sur la surface annulaire (10) du codeur (6).

2. Joint selon la revendication 1, dans lequel l'élément codeur (6) est de l'élastoferrite.

3. Joint selon l'une quelconque des revendications 1 à 2, dans lequel la lèvre (4) adhère directement sur l'élément codeur (6).

4. Joint selon l'une quelconque des revendications 1 à 3, dans lequel la surface annulaire (10) de l'élément codeur (6) s'étend radialement.

5. Joint selon l'une quelconque des revendications 1 à 4, dans lequel l'élément codeur (6) adhère directement sur le manchon (2), ledit manchon étant métallique.

6. Joint selon l'une quelconque des revendications 1 à 5, dans lequel l'élément codeur (6) présente une piste circulaire munie de repères polarisés formés par des secteurs polarisés alternativement nord-sud.

7. Joint selon la revendication 6, dans lequel l'élément codeur (6) présente une première face annulaire (17) orientée radialement vers l'intérieur qui adhère directement sur une paroi extérieure (19) du manchon (2) s'étendant longitudinalement, et une deuxième face circulaire (18) orientée radialement vers l'extérieur sur laquelle est formé la piste munie des repères polarisés.

8. Joint selon l'une quelconque la revendication 7, dans lequel la deuxième face circulaire (18) présente une portion (18a) s'étendant le long d'une partie de l'arbre (3) qui n'est pas entourée par le carter fixe (5), la piste munie des repères polarisés étant formée sur ladite portion (18a).

9. Joint selon la revendication 6, dans lequel le manchon (2) présente une collerette annulaire (12) s'étendant radialement et dans lequel l'élément codeur (6) présente une première face annulaire (14) s'étendant radialement qui adhère directement à ladite collerette (12), et une deuxième face circulaire (15), parallèle à la première face (14), sur laquelle est formée la piste munie des repères polarisés.

10. Dispositif comprenant un arbre rotatif (3), un carter (5) rempli de liquide (H) dans lequel pénètre l'arbre rotatif, et un joint dynamique (1) selon l'une quelconque des revendications précédentes dont le manchon (2) est calé en rotation par rapport à l'arbre rotatif et dont la lèvre d'étanchéité (4) est en contact glissant avec le carter, en assurant l'étanchéité entre ledit arbre et ledit carter.

11. Procédé de fabrication d'un joint dynamique d'étanchéité pour arbre rotatif selon l'une quelconque des revendications 1 à 9, **caractérisé en ce que :**
- on place concentriquement dans un premier demi-moule le manchon (2), une ébauche de l'élément codeur (6) et une préforme de la lèvre (4), ladite ébauche étant au moins partiellement en contact avec ledit manchon (2) et ladite préforme étant au moins partiellement en contact avec ladite ébauche ;
- on effectue un pressage à chaud à l'aide d'un deuxième demi-moule pour vulcaniser ladite ébauche, ainsi que pour conformer ladite ébauche de l'élément codeur (6) et ladite préforme de la lèvre (4) selon un profil déterminé.

## Claims

1. A dynamic seal for a rotary shaft comprising a sleeve (2) for being constrained in rotation on the shaft (3), and an annular lip (4) to come into sliding rotary contact with a stationary casing (5) surrounding said shaft, such that the dynamic seal provides sealing between said shaft and said casing, and an annular encoder element (6) of magnetizable polymer presenting at least one polarized mark and at least one annular surface (10), which is secured to said sleeve (2), **characterized in that** the annular lip (4) is made of PTFE, and **in that** said lip (4) is bonded to the annular surface (10) of the encoder element (6).

2. A seal according to claim 1, wherein the encoder element (6) is made of elastoferrite.

3. A seal according to anyone of claims 1 to 2, wherein the lip (4) is bonded directly to the encoder element (6).

4. A seal according to anyone of claims 1 to 3, in which the annular surface (10) of the encoder element (6) extends radially.

5. A seal according to anyone of claims 1 to 4, in which the encoder element (6) is bonded directly to the sleeve (2), said sleeve being made of metal.

6. A seal according to anyone of claims 1 to 5, wherein the encoder element (6) presents a circular track provided with polarized marks formed by sectors with alternating north and south polarization.

7. A seal according to claim 6, wherein the encoder element (6) presents a first annular face (17) facing radially inwards which is bonded directly to an outside wall (19) of the longitudinally-extending sleeve (2), and a second annular face (18) facing radially outwards on which the track provided with polarized marks is formed.

8. A seal according to claim 7, wherein the second annular face (18) presents a portion (18a) extending along a fraction of the shaft (3) which is not surrounded by the stationary casing (5), the track provided with polarized marks being formed on said portion (18a).

9. A seal according to claim 6, wherein the sleeve (2) presents an annular collar (12) extending radially and in which the encoder element (6) presents a first annular face extending radially, which face is bonded directly to said collar (12), and a second annular face (15), parallel to the first face (14), on which the track provided with polarized marks is formed.

10. A device comprising a rotary shaft (3), a casing (5) filled with liquid (H) in which the rotary shaft penetrates, and a dynamic seal (1) according to any of the preceding claims having its sleeve (2) constrained to rotate with the rotary shaft and having its sealing lip (4) in sliding contact with the casing, thereby providing sealing between said shaft and said casing.

11. A method of fabricating a dynamic seal for a rotary shaft according to anyone of claims 1 to 9, **characterized in that**:
. placing said sleeve (2), a blank for said encoder element (6) and a preform for the lip (4) concentrically in a first half-mold, said blank being at least partially in contact with said sleeve (2), and said preform being at least partially in contact with said blank;
. hot-pressing by means of a second half-mold to vulcanize said blank, as well as to shape said blank for the encoder element (6) and said preform for the lip (4) to take up a determined profile.

## Patentansprüche

1. Dynamische Verbindung für eine rotierende Welle, umfassend eine Manschette (2), die zur Drehverklemmung an der Welle (3) vorgesehen ist, eine ringförmige Lippe (4), die dazu vorgesehen ist, in einen gleitenden Drehkontakt mit einem die Welle umgebenden festen Gehäuse (5) zu kommen, sodass die dynamische Verbindung die Dichtigkeit zwischen der Welle und dem Gehäuse garantiert, und ein ringförmiges Kodierelement (6) aus magnetisierbarem Polymer, das wenigstens eine polarisierte Markierung und wenigstens eine ringförmige Fläche (10) aufweist, das mit der Manschette (2) einstückig verbunden ist, **dadurch gekennzeichnet, dass** die ringförmige Lippe (4) aus PTFE gebildet ist, und **dadurch**, dass die Lippe (4) auf die ringförmige Fläche (10) des Kodierers (6) gehaftet ist.

2. Verbindung nach Anspruch 1, bei welcher das Kodierelement (6) aus Elastoferrit ist.

3. Verbindung nach einem der Ansprüche 1 bis 2, bei welcher die Lippe (4) direkt an dem Kodierelement (6) haftet.

4. Verbindung nach einem der Ansprüche 1 bis 3, bei welcher die ringförmige Fläche (10) des Kodierelements (6) radial verläuft.

5. Verbindung nach einem der Ansprüche 1 bis 4, bei welcher das Kodierelement (6) direkt an der Manschette (2) haftet, wobei die Manschette metallisch ist.

6. Verbindung nach einem der Ansprüche 1 bis 5, bei welcher das Kodierelement (6) eine kreisförmige Spur umfasst, versehen mit polarisierten Markierungen, die durch alternativ Nord-Süd polarisierte Sektoren gebildet sind.

7. Verbindung nach Anspruch 6, bei welcher das Kodierelement (6) eine erste, radial nach innen ausgerichtete, ringförmige Fläche (17) aufweist, die direkt an einer in Längsrichtung verlaufenden Außenwand (19) der Manschette (2) haftet, und eine zweite, radial nach außen ausgerichtete, ringförmige Fläche (18) aufweist, an welcher die mit den polarisierten Markierungen versehene Spur gebildet ist.

8. Verbindung nach Anspruch 7, bei welcher die zweite ringförmige Fläche (18) einen Teil (18a) umfasst, der sich entlang eines Teils der Welle (3) erstreckt, der nicht von dem festen Gehäuse (5) umgeben ist, wobei die mit den polarisierten Markierungen versehene Spur an diesem Teil (18a) gebildet ist.

9. Verbindung nach Anspruch 6, bei welcher die Manschette (2) einen ringförmigen Kragen (12) aufweist, der radial verläuft, und bei welcher das Kodierelement (6) eine erste, radial verlaufende, ringförmige Fläche (14) aufweist, die direkt an dem Kragen (12) haftet, und eine zu der ersten Fläche (14) parallele zweite, ringförmige Fläche (15), an der die mit den polarisierten Markierungen versehene Spur gebildet ist.

10. Vorrichtung umfassend eine rotierende Welle (3), ein Gehäuse (5), gefüllt mit Flüssigkeit (H), in die die rotierende Welle eindringt, und eine dynamische Verbindung (1) nach einem der vorhergehenden Ansprüche, deren Manschette (2) drehverklemmt bezüglich der rotierenden Welle ist und deren Dichtlippe (4) in gleitendem Kontakt mit dem Gehäuse ist, wodurch die Dichtigkeit zwischen der Welle und dem Gehäuse garantiert wird.

11. Verfahren zur Herstellung einer dynamischen Dichtigkeitsverbindung für eine rotierende Welle nach einem der Ansprüche 1 bis 9, **dadurch gekennzeichnet, dass**:
- eine Manschette (2), ein Rohling des Kodierelements (6) und eine Vorform der Lippe (4) konzentrisch in einer ersten Halbform platziert werden, wobei der Rohling wenigstens teilweise in Kontakt mit der Manschette (2) ist und die Vorform wenigstens teilweise in Kontakt mit dem Rohling ist;
- mittels einer zweiten Halbform ein Heißpressen durchgeführt wird, um den Rohling zu vulkanisieren und um den Rohling des Kodierelements (6) und die Vorform der Lippe (4) einem bestimmten Profil anzupassen.
